# EUROPEAN PATENT SPECIFICATION

(11) **EP 1 366 669 B1**
(45) Date of publication and mention of the grant of the patent: **08.09.2004**
(21) Application number: 02425316.3
(22) Date of filing: 20.05.2002
(51) Int. Cl.: A22B 7/00

(54) **Process for treatment and disposal of an organic proteic mass of animal origin and related equipment**
Verfahren zur Behandlung und Entsorgung einer organischen Proteinmasse tierischen Ursprungs und entsprechende Vorrichtung
Procédé de traitement et d'élimination d'une masse organique protéique d'origine animale et équipement associé

(43) Date of publication of application: 03.12.2003
(73) Proprietor: Eco-Tec Future Energy Tecnology - S.r.l., 39100 Bolzano (IT)
(72) Inventor: Sanelli, Bruno, 66016 Montesilvano (Pescara) (IT)
(74) Representative: Tansini, Elio Fabrizio

(56) References cited:
- EP-A- 1 021 958
- IT-B- 1 244 401
- US-A- 5 972 177
- GUERRERO L ET AL: "Anaerobic hydrolysis and acidogenesis of wastewaters from food industries with high content of organic solids and protein" WATER RESEARCH, ELSEVIER SCIENCE PUBLISHERS, AMSTERDAM, NL, vol. 33, no. 15, October 1999 (1999-10), pages 3281-3290, XP004179104 ISSN: 0043-1354

## Description

The present invention relates to a process for treatment of an organic protein mass of animal origin, as well as to the equipment to be used for putting said process into effect. In particular, the present invention relates to a process for disposal of protein meals and/or waste from slaughtering mostly consisting of carcasses of slaughtered animals for human feeding, and to the related equipment to be used for putting said process into effect.

Based on some known treatment processes, the organic protein mass of animal origin from slaughtering waste is treated by a first crushing step to obtain a uniform mass.

The crushed (ground) mass is submitted to a fat-extraction step through use of pressure and temperature, in an autoclave for example or, alternatively, with appropriate solvents (drying-extraction process). Alternatively, the ground and dried mass can be pressed at high pressures (pressing process).

The pressing process enables final products to be obtained that consist of about 8% by weight of fats, about 10% by weight of H₂O and about 35% by weight of proteins mixed with about 35% by weight of mineral salts.

In the pressing process the achieved extraction of the fat contained in said organic protein mass is only partial. In addition, a prolonged use in time of high pressure values during the pressing step causes decay of the obtained fat material which cannot be utilised any longer for food uses.

The drying-extraction process to be carried out through appropriate solvents on the contrary enables an almost complete extraction of the animal fat. The obtained fat is of good quality and therefore can be addressed to industrial uses or food uses.

In addition, obtained from the drying-extraction process is a product containing about 40% by weight of proteins mixed with about 30% by weight of salts contained in the slaughtered animal bones (protein meal).

It is known that animal protein meal was once utilised in bovine feeding but, after spreading of the mad cow disease, it can no longer be employed in cattle breeding and therefore it is necessary to completely dispose of it.

Among the methods adopted for disposing of a product that, as above said, contains about 30-40% by weight of proteins kneaded or mixed with about 30-40% by weight of mineral salts (and a varying amount of fat mass), it is worthwhile mentioning burning in furnaces.

However, this method suffers from some drawbacks.

A first drawback resides in that the product submitted to combustion needs high temperatures so as to be burnt. Said high temperatures can be obtained by a great waste of energy.

A second drawback resides in that the product submitted to combustion leaves a residue of unburnt compounds (ashes) consisting of the mineral salts present in an amount included between 30 and 40% by weight with respect to the overall weight of the product.

A further drawback is represented by the fact that there is a minimum energy recovery from combustion of the product, which discourages the development of this method of disposal.

In addition, the ashes obtained from combustion are no longer usable as a raw material to be recycled, as fertilising manure for example.

Finally, it should be remembered that in the drying-extraction process the required high temperatures for carrying out the first drying step and possibly the subsequent step involving extraction by steam, cause denaturation of the proteins present in the animal waste material with formation, in protein meals too, of protein polymers that make it impossible to completely burn the obtained products even to temperatures beyond 1000°C. Consequently, by operating to such temperatures, the necessary energy amount for combustion of the protein polymers that under these conditions will never be complete, is at least identical with or even higher than the energy to be recovered from combustion in heating plants or from steam; therefore the whole process is economically not advantageous because it is energetically negative.

For the above reason, only on the Italian territory more than 400,000 metric tons of animal protein meals have been accumulated.

The animal protein meals are also very favourable substrates for bacterial fermentation and development of fungi and moulds and therefore they are potentially polluting for the environment and pathogenic for the human beings.

It is generally known that the organic protein mass of animal origin coming from animal slaughtering fundamentally comprises two fractions.

A first fraction called "wet" fraction comprises the slaughtered animal carcasses, entrails (viscera), cartilagines, blood and others.

A second fraction called "dry" fraction comprises animal meals, in particular protein meals.

A research in the field of animal waste disposal has made attempts since long to find a process enabling the waste form slaughtering and/or animal meals to be fully disposed of.

Some known methods allow separation of the different components (fats, proteins, salts) to be obtained. Other known methods enable final products to be obtained that can only be used for some industrial purposes.

Document IT 01244401 relates to a process in which an organic protein mass of animal origin is hydrolysed in an aqueous solution with proteolytic enzymes. An aqueous solution containing proteolytic enzymes is added to an organic protein mass of origin animal previously ground. This phase is carried out in a hopper under mixing. After that the mass under production is transfered in a reactor which works under vacuum conditions. The transfer is carried out by means of the vacuum that is present inside the reactor. In said reactor the separation of the components forming the organic protein mass takes place. The separated componentes are: fats, proteins and an osseous residue containing a small quantities of fats and proteins.

Document EP 1021958 A1 relates to a chemical process of hydrolysis applied to proteinaceous broth, animal waste material and waste material from animal organs. The process comprises the simultaneous execution of two treatments: a chemical hydrolysis and heat treatment under pressure. The chemical treatment of hydrolysis under pressure can be carried out by means of the action of acids or bases, for example by using sulphuric acid or hydrochloric acid, soda or lime. The thermal treatment breaks down proteins and may be at 140 °C, 3 bar, pH> 11 and lasts at least 30 minutes.

Therefore there is a need for a method of treatment and disposal of an organic protein mass of animal origin that is devoid of the drawbacks present in the known art.

An industrial process for treatment of an organic protein mass of animal origin has been now surprising found that enables the protein component and fat component to be separated from the mineral salts contained in said organic protein mass.

Advantageously, burning of the obtained protein component and/or fat component leaves a residue of unburst compounds (ashes) consisting of mineral salts in an amount lower than 1% by weight, with respect to the overall weight of the burnt component.

It is a first object of the present invention to provide a process for treatment of an organic protein mass of animal origin the features of which are set out in the appended independent claim.

It is another object of the present invention to provide an equipment for carrying the concerned process into effect the features of which are set out in the appended independent claim.

Advantageously, the process involves working of the organic protein mass by use of temperature, pressure and hydrolysis in an aqueous solution that allows formation of macromolecules (protein polymers of high molecular weight, for example) to be prevented by producing a combustible protein component (devoid of salts) and a combustible fat component (devoid of salts) with a positive energy return at the end of said disposal process in a burner.

For instance, by way of example only, the process in accordance with the invention comprises the following steps:
a) hydrolysing the organic protein mass to obtain at least one first separation of the protein component, the fat component and the salt component that constitute said organic protein mass;
b) physically separating the protein component, fat component, salt component and aqueous component;
c) treating the protein component comprising a protein mass, residues of fat mass and residues of mineral salts;
d) recovering the protein mass;
e) treating the fat component comprising a fat mass, residues of protein mass and residues of mineral salts;
f) recovering the fat mass;
g) treating the salt component comprising residues of protein mass and residues of fat mass;
h) recovering the mineral salts;
i) treating and recovering the aqueous phase comprising residues of protein mass, residues of fat mass and residues of mineral salts;
j) burning the emulsion formed of a mixture of the protein mass and/or fat mass previously recovered in d) and f).

The process in accordance with the invention will be now illustrated in more detail with reference to the accompanying drawings, given by way of non-limiting example only, in which:
- Fig. 1 is a diagrammatic illustration for obtaining the protein component, the fat component, the salt component and the aqueous component;
- Fig. 2 is a diagrammatic illustration for treatment of the protein component;
- Fig. 3 is a diagrammatic illustration for treatment of the fat component;
- Fig. 4 is a diagrammatic illustration for treatment of the salt component:

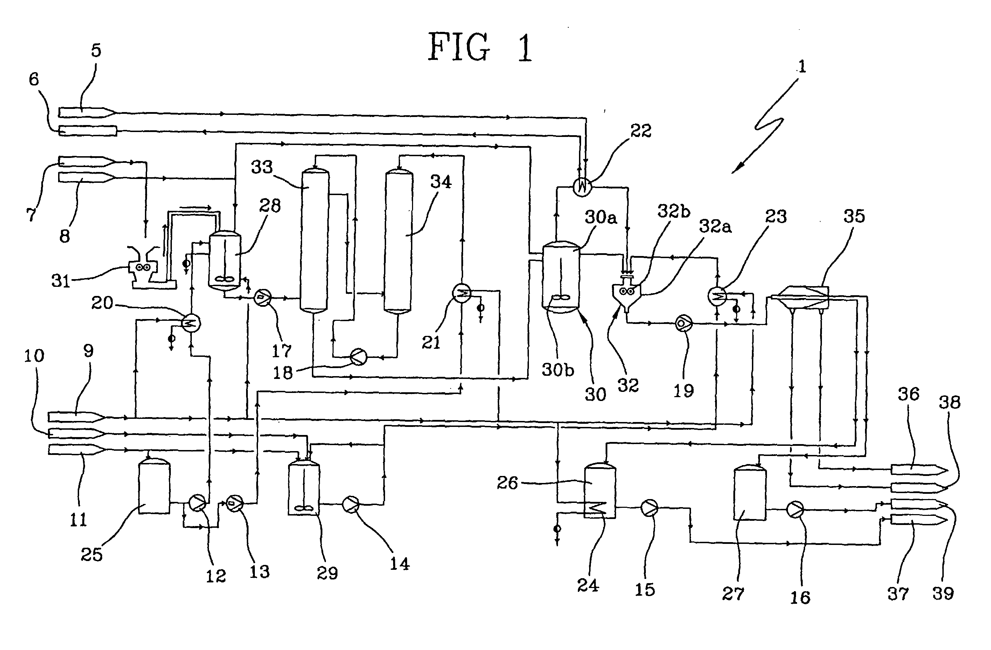

With reference to Fig. 1 the following equipment parts are identified:
- water from a supply 5;
- water directed to a storage source 6;
- waste from slaughtering "wet fraction" 7;
- protein meals "dry fraction" 8;
- steam source 9;
- means containing an acid aqueous solution 10;
- process water 11;
- pumping means 12, 13, 14, 15, 16, 17, 18 and 19;
- heat-exchanger means 20, 21, 22, 23, 24;
- containing means 25, 26 and 27;
- mixing means 28, 29 and 30;
- grinding/crushing means 31 and 32;
- means for carrying out a digestion of the organic protein mass 33 and 34 (fusion-cleavage system);
- separation means 35;
- means for containing the protein component 36;
- means for containing the fat component 37;
- means for containing the salt component 38;
- means for containing the aqueous component 39.

Preferably, the waste from slaughtering "wet fraction" 7 is submitted to a first grinding or crushing step using the grinding means 31 thereby obtaining bone crushing and meat grinding. From grinder 31 a uniform "wet" feeding mass is obtained.

From the grinding means 31, the uniform mass obtained is sent to a dilution apparatus 28. For example, the dilution apparatus 28 comprises a container 28a, an aqueous solution and stirring elements 28b.

In a preferred embodiment, the animal protein meals 8 are sent to a dilution apparatus 28.

The dilution apparatus 28 is provided with stirring means 28b and a steam heating system 20. Therefore a suitable amount of H₂O is added, which is taken from a tank 25 through a pump 12, heated in the heat-exchanger 20. Subsequently, the uniform aqueous mass also containing bone fragments is mixed until a homogeneous mixture (homogenisation step) is obtained. The necessary H₂O volume for this process step of the present invention is obviously a function of the initial slaughtering product that may also all consist of the "dry" fraction (protein meal). In case of treatment of the protein meal 18, it can obviously be directly introduced into the dilution apparatus 28 because grinding is not required.

Alternatively, the protein meal 8 can be introduced into the mixing means 30.

The homogeneous mixture thus obtained is drawn from the dilution apparatus 28 by a pump 17 and pushed, at the process pressure, into the fusion-cleavage system 33 and 34 into which a suitable amount of H₂O is countercurrent introduced, by a high-pressure pump 13. The admitted water amount is about 10% in volume with respect to the amount of the treated mixture. The admitted water amount is suitably heated to a temperature in the range of 110 to 160°C. In said fusion-cleavage system 33 and 34 separation of at least one protein component, at least one fat component and at least one salt component takes place. The salt component mainly consists of calcium phosphates present in bones, which salts will be dispersed in the process water in a more or less homogeneous manner.

Advantageously, heating of the countercurrent and high-pressure mixture does not cause formation of incombustible protein polymers and, in addition, does not modify the quality of the obtainable fat due to the high speed at which it takes place. In addition, by effect of pressure that can reach a value included between 20 and 30 bars, the obtained mixture can enter the expander 30 where an adiabatic cooling takes place together with lowering of the mass temperature and evaporation of the water that can be partly recovered by condensing in condenser 22 and put back into mixer 32 into which the mixture is also introduced.

The last-mentioned fine mixer (homogeniser) 32 aims at reducing the treated-mixture constituents into very small fragments and therefore carrying out a perfect homogenisation of same which will then be treated with a solution comprising an acid substance.

Preferably, the acid substances are selected from the organic and/or inorganic acids such as citric, acetic, oxalic and phosphoric acids. Advantageously, citric acid is employed. Preferably, the acid solution is heated and has a pH value included from 4 to 6.5; more preferably from 5 to 6.

For example, the acid solution is prepared in a mixer 29, drawn by a pump 14 and heated in a heat exchanger 23. Addition of the hot acid aqueous solution aims at maintaining the protein component, fat component and salt component forming the organic protein mass dispersed and separated (demulsification) in water. Furthermore, addition of the acid aqueous solution enables the polymeric chains to be broken up thereby preventing formation of incombustible protein polymers.

A pump draws the demulsified (hydrolysed) mixture from mixer 32 and sends it to a separator 35, preferably a centrifugal separator of the decanter type, capable of carrying out physical separation of the following components:
a) a protein component comprising a protein mass, residues of fat mass and residues of mineral salts;
b) a fat component comprising a fat mass, residues of protein mass and residues of mineral salts;
c) a salt component comprising mineral salts such as phosphate salts for example;
d) an aqueous component comprising residues of protein mass, residues of fat mass and residues of mineral salts.

Preferably, the protein mass comprises proteins and water in a ratio by weight included between 1:10 and 10:1, more preferably between 1:5 and 5:1.

Preferably, the fat mass comprises fats and impurities in a ratio by weight in the range of 1:10 to 10:1, more preferably of 1:5 to 5:1.

Preferably, the mineral salts comprise phosphate salts in a mixture with water in a ratio by weight included between 1:5 and 5:1, more preferably in the range of 1:3 to 3:1.

Advantageously, the above described components a), b), c) and d) are destined to the subsequent purification treatments and they differentiate from each other depending on the individual components.

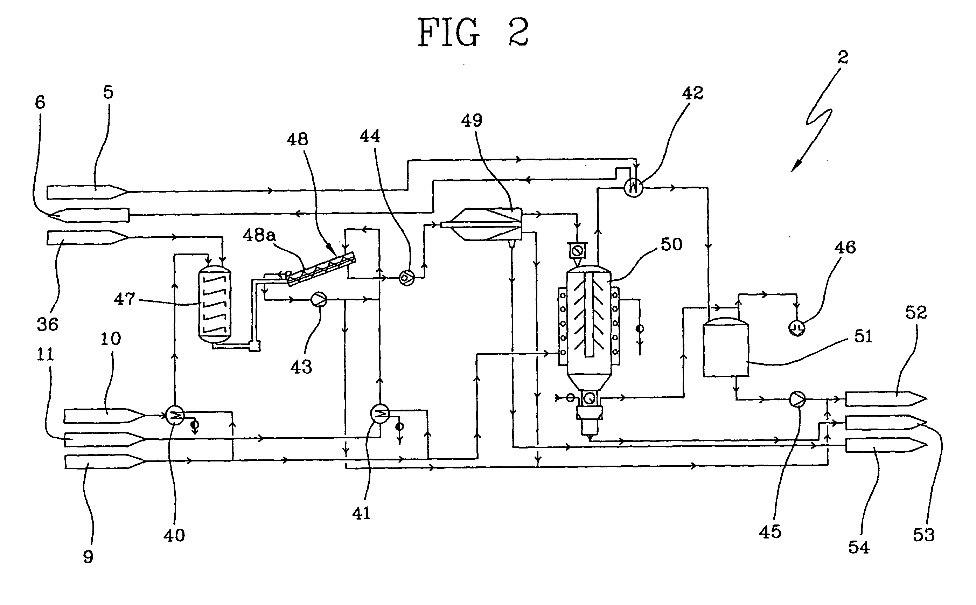

Advantageously, the above described process can be used for treatment of a mixture comprising waste from slaughtering and animal protein meals in any ratio. With reference to Fig. 2, the following equipment parts are identified:
- water from a supply 5;
- water directed to a storage source 6;
- protein component to be treated 36;
- steam source 9;
- containing means for a source of an acid aqueous solution 10;
- process water 11;
- heat exchanger means 40, 41 and 42;
- pumping means 43, 44 and 45;
- vacuum pumping means 46;
- mixing means 47;
- countercurrent washing apparatus 48;
- separation means 49;
- drying means 50;
- containing means 51;
- process water intended for biological purification 52;
- protein mass 53;
- residues of mineral salts 54.

In accordance with the process of the present invention, treatment of the protein component 36 takes place in an appropriate mixer 47 into which the protein component from the centrifugal separator 35 is introduced.

Further added into mixer 47 is a solution comprising an acid substance drawn from container 10. Preferably citric acid is employed to obtain a pH value included between 4 and 6.5, preferably in the range of 5 to 6.

The acid solution 10 is previously heated by a heat exchanger 40.
Archimedean-screw transportation means 48a transfer the homogeneous acidified paste thus obtained to the washing system with an appropriate amount of countercurrent hot water 48. Washing takes place in the washing apparatus 48 through the water drawn from tank 25, heated with a heat exchanger 41 and recirculated in said washing system 48 by means of pump 43. While the washing waters, after a certain number of recirculation cycles, will be sent to the purification apparatus, the protein component comprising a protein solution in an aqueous phase thus obtained is sent by a pump 44 to a separator 49; preferably it is a centrifugal separator of the decanter type capable of separating the washed protein mass from the residual phosphate salts 54 (incorporated in the proteins) and from the waste waters 52. The waste waters 52 after biological purification can be recycled.

The protein mass contains water in an amount by weight included between 20 and 40%, preferably in an amount of 25 to 35%.

The mineral salts contain water in an amount by weight included between 15 and 40%, preferably in an amount in the range of 20 to 30%.

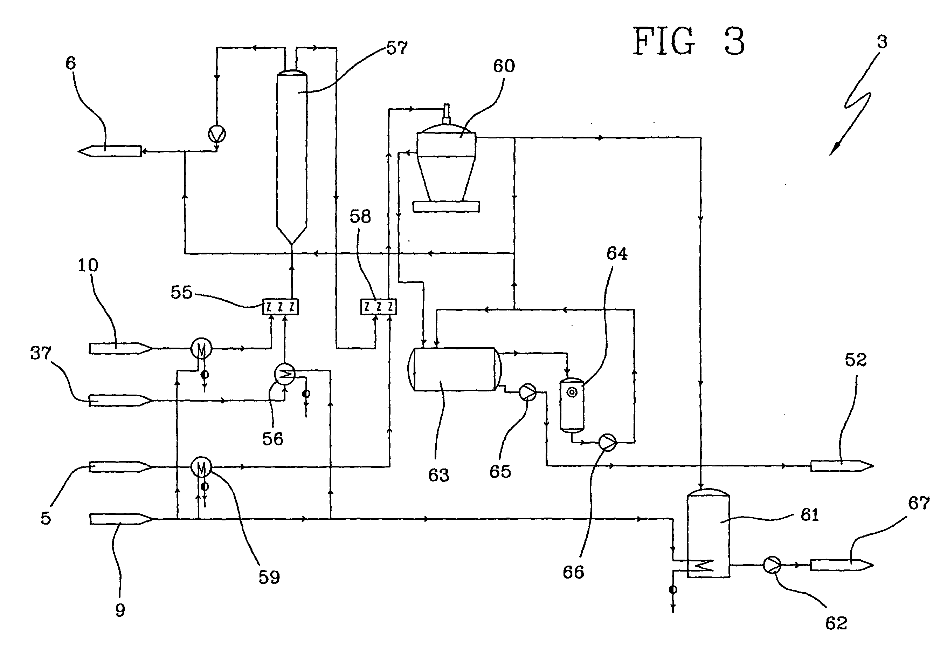

The obtained phosphate salts 54 are sent, through Archimedean-screw transportation, together with the salts from the first centrifugal separator 35, to a vacuum drying system (Fig. 3) thereby obtaining full drying of the mineral salts, and they can then be sent from drier 67 to the storage container 69 (Fig. 3).

Advantageously, the salts obtained by the process of the present invention can be sold as raw materials because they are chemically pure and undegraded (calcined). Practically, the obtained salts are not submitted to thermal calcination.

On the contrary, in the treatment methods of the known art the obtained mineral salts, about 27% by weight, remained in a mixed condition with fats and proteins. Such a product if burnt forms ashes that must be sent to a dump for disposal.

The protein phase is sent to a vacuum drier 50 to completely eliminate the water contained therein.

Preferably the protein phase from drier 50 is sent to an apparatus for fuel preparation because the protein mass obtained from the process of the present invention is almost completely devoid of incombustible products (practically devoid of salts and protein polymers). The fuel comprising the protein mass and/or fat mass can be advantageously used in a burner for production of electrical energy thereby obtaining a true disposal of the treated organic protein mass.

With reference to Fig. 3, the following equipment parts are identified:
- water from a supply 5;
- water directed to a storage source 6;
- fat component to be treated 37;
- steam source 9;
- means containing an acid aqueous solution 10;
- mixing means 55, 58;
- heat exchanger means 56, 59;
- standing means 57;
- centrifugal-separation means 60;
- pumping means 65 and 66;
- means for preparation of a combustible emulsion 67.

According to a process of the present invention the fat component 37 from the centrifugal separator 35 and from tank 26 is sent through pump 15 to mixer 55. Preferably, the fat component 37 is preheated in the heat exchanger 56. Also the acid aqueous solution drawn from container 10 reaches the same mixer 55.

The mixture thus obtained is formed of the fat component and the acid solution. The mixture, after being sent to a standing apparatus 57, is directed to a second mixer 58 into which about 10% by weight of H₂O from tank 5 heated in a heat exchanger 59 flows.

The mass thus worked is poured into a centrifugal separator 60 where the fat mass is separated from water. The washed fat mass is collected in tank 61 and sent, through pump 62, to preparation of fuel 67. Thus a combustible emulsion is obtained which comprises the fat mass and the protein mass in a ratio by weight in the range of 1:10 to 10:1.

Advantageously, the fuel obtained from the present invention can be burnt in a very cheap liquid-boiler.

In addition, the combustible emulsion obtained with the process of the present invention can be advantageously utilised in a thermal way for production of electrical energy because it succeeds in developing about 5700 Kcal/kg during its combustion. Therefore, the process of the present invention constitutes a true system for disposal of animal waste and/or animal meals.

The aqueous phase coming out of the centrifugal separator 60 and the waste water phase obtained in the first centrifugal separator 35 are finally sent to the phase separator 63 where separation by decantation and overflow of the fat matter entrained by the washing waters takes place.

While waters are sent to the purification apparatus 52, the fat matter from overflow will be sent back to the collecting tank 64.

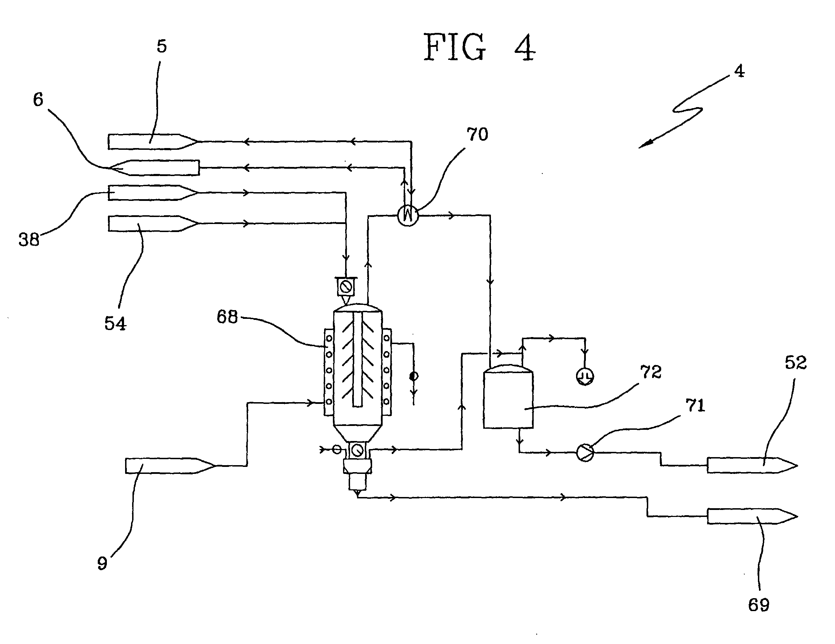

With reference to Fig. 4, it is identified:
- water from a supply 5;
- water directed to a storage source 6;
- salt component to be treated 38;
- mineral-salt residues 54;
- steam portion 9;
- drying system 68;
- means for preparation of a combustible emulsion 69;
- heat exchanger means 70;
- pumping means 71;
- containing means 72.

The salt component to be treated 38, preferably together with the mineral-salt residues 54, is introduced into the drying system 68. Preferably, drying takes place under vacuum.

It is a further object of the present invention use of the process for disposal of the organic protein mass for production of electrical energy.

All necessary apparatus for carrying out the process of the present invention are commonly used and known to those skilled in the art and therefore will not be herein described in detail.

Another object of the present invention consists of an equipment for use of the process as described and claimed in the present invention.

The equipment for treatment of an organic protein mass of animal origin is characterised in that it comprises:
- mixing means 30 for said organic protein mass;
- grinding means 32 for said organic protein mass to carry out hydrolysis of said organic protein mass;
- separation means 35 for the components constituting the organic protein mass;
- a plurality of containers 36, 37, 38, 39 each of which contains a respective component constituting the organic protein mass.

Preferably, said mixing means 30 comprises a container 30a holding said organic protein mass and a rotating propeller 30b in said container 30a to mix said organic protein mass.

Preferably, said grinding means 32 comprises a container 32a for the organic protein mass; an acid solution inserted in said container and at least one Archimedean-screw element 32b rotating in the container.

Preferably, said separation means 35 comprises a rotating container 35a. Preferably, said separation means 35 comprises a centrifugal separator of the decanter type.

By way of non-limiting example only, some embodiments of the present invention are described hereinafter:

### EXAMPLE 1 - Separation of the components constituting the waste matter from animal slaughtering.

A process for treatment of slaughtering waste having the following composition by weight is described (t/y stands for ton/year):
Proteins 32000 t/y (25%);
Fats 21760 t/y (17%);
Soluble fats 19160 t/y (2%);
Phosphate salts 19160 t/y (15%);
Water 52480 t/y (41%).
The composition refers to 128,000 t/y (100%). This slaughtering waste is ground in a grinder 31 and submitted to fusion-cleavage in apparatus 33 and 34 with 6400 t/y of hot water and subsequently finely ground in grinder 32 to which citric acid in an aqueous solution of 4000 t/y is added.
The four components are separated in separator 35, thereby obtaining the individual components.
1. Protein component with the following composition

| - | - t/y | - % |
|---|---|---|
| Proteins | - 30900 | - 56.7 |
| Fats | - 450 | - 0.8 |
| Salts | - 2350 | - 4.4 |
| Citric Acid | - 125 | - 0.2 |
| Water | - 20600 | - 37.9 |
| Total Amounts | - 54425 | - 100 |
| Note that salts (2350 t/y; 44%) are divided into soluble salts 850 t/y (1.6%) and phosphate salts 1,500 t/y (2.8%). Salts are in all 4.4%. | | |

2. Fat component with the following composition

| - | - t/y | - % |
|---|---|---|
| Proteins | - 350 | - 1.6 |
| Fats | - 20910 | - 96.3 |
| Salts | - 39 | - 0.2 |
| Citric Acid | - 3 | - 0.0 |
| Water | - 420 | - 1.9 |
| Total Amounts | - 21722 | - 100 |
| Note that salts (39 t/y; 0.2%) are divided into soluble salts 18 t/y (0.1%) and phosphate salts 21 t/y (0.1%). | | |

3. Salt component with the following composition

| - | - t/y | - % |
|---|---|---|
| Proteins | - 300 | - 1.0 |
| Fats | - 200 | - 0.1 |
| Salts | - 18021 | - 59.5 |
| Citric Acid | - 70 | - 0.2 |
| Water | - 11750 | - 38.6 |
| Total Amounts | - 30421 | - 100 |
| Note that salts (18,021 t/y; 59.5%) are divided into soluble salts 480 t/y (1.6%) and phosphate salts 17,621 t/y (57.9%). | | |

4. Aqueous component with the following composition

| - | - t/y | - % |
|---|---|---|
| Proteins | - 450 | - 1.4 |
| Fats | - 200 | - 0.6 |
| Salts | - 1270 | - 4.0 |
| Citric Acid | - 202 | - 0,6 |
| Water | - 29710 | - 93.4 |
| Total Amounts | - 31832 | - 100 |
| Note that salts (1,270 t/y; 4%) are divided into soluble salts 1,252 t/y (3.9%) and phosphate salts 18 t/y (0.1%). | | |

### EXAMPLE 2 - Separation of the components of a waste mixture from slaughtering and animal meals

By operating under the same conditions as described in Example 1, a mixture consisting of 2/3 of slaughtering waste and 1/3 of animal meals having the following composition is used:
- Proteins 42240 t/y (32%);
- Fats 18480 t/y (14%);
- Salts 28600 t /a (21.7%);
- Water 42680 t/y (32.3%).
This mixture consisting of slaughtering waste and animal meals is ground in grinder 31 and submitted to fusion-cleavage at 33 and 34 with 8120 t/y of water and finely ground again in grinder 32 to which citric acid in an saturated aqueous solution 5080 t/y is added.

The four phases in separator (35) are separated thereby obtaining the individual components.
1. Protein component with the following composition

| | - t/y | - % |
|---|---|---|
| Proteins | - 4087 | - 57.1 |
| Fats | - 380 | - 0.5 |
| Salts | - 3110 | - 4.3 |
| Citric Acid | - 163 | - 0.2 |
| Water | - 27191 | - 37.9 |
| Total Amounts | - 71631 | - 100 |
| Note that salts (3,110 t/y; 43%) are divided into soluble salts 1,150 t/y (1,6 %) and phosphate salts 1,960 t/y (2,7 %). | | |

2. Fat component with the following composition

| - | - t/y | - % |
|---|---|---|
| Proteins | - 460 | - 2.5 |
| fats | - 17760 | - 95.2 |
| Salts | - 47 | - 0.2 |
| Citric Acid | - 38 | - 0,2 |
| Water | - 1356 | - 1.9 |
| Total Amounts | - 18661 | - 100 |
| Note that salts (47 t/y; 0,2%) are divided into soluble salts 22 t/y (0,1%) and phosphate salts 25 t/y (0,1 %). | | |

3. Salt component with the followinq composition

| - | - t/y | - % |
|---|---|---|
| Proteins | - 396 | - 1.0 |
| Fats | - 170 | - 0,4 |
| Salts | - 23720 | - 59.7 |
| Citric Acid | - 90 | - 0,2 |
| Water | - 15380 | - 38.7 |
| Total Amounts | - 39756 | - 100 |
| Note that salts (23,720 t/y; 58%) are divided into soluble salts 650 t/y (1,61 %) and phosphate salts 23.070 t/y (58,1 %). | | |

4. Aqueous component with the following composition

| - | - t/y | - % |
|---|---|---|
| Proteins | - 597 | - 3.9 |
| Fats | - 170 | - 1.1 |
| Salts | - 1723 | - 11.4 |
| Citric Acid | - 217 | - 1.4 |
| Water | - 12445 | - 82.2 |
| Total Amounts | - 15152 | - 100 |
| Note that salts (1,723 t/y; 11.4%) are divided into soluble salts 1,698 t/y (11,2%) and phosphate salts 25 t/y (0,2 %). | | |

### EXAMPLE 3 - Treatment of the individual components of the slaughtering waste.

The obtained individual components as set out in Example 1 can be further treated to be then either sent to combustion (protein phase and fat phase) for energy recovery or marketed (salt phase).
In particular the protein component having the composition set out in Example 1 is treated with hot water 16000 t/y and citric acid in a saturated aqueous solution 1500 t/y to yield three component phases, as follows.

| Protein Mass | - t/y | - % |
|---|---|---|
| Proteins | - 30700 | - 59.0 |
| Fats | - 350 | - 0.7 |
| Salts | - 470 | - 0.8 |
| Citric Acid | - 145 | - 0.3 |
| Water | - 20400 | - 39.2 |
| Total Amounts | - 52065 | - 100 |

| Salts | - t/y | - % |
|---|---|---|
| Proteins | - 50 | - 2.1 |
| Fats | - 30 | - 1.2 |
| Salts | - 1420 | - 58.3 |
| Citric Acid | - 6 | - 0.2 |
| Water | - 930 | - 33.2 |
| Total Amounts | - 2436 | - 100 |

| Aqueous Mass | - t/y | - % |
|---|---|---|
| Proteins | - 150 | - 0.9 |
| Fats | - 70 | - 0.4 |
| Salts | - 460 | - 2.6 |
| Citric Acid | - 124 | - 0.7 |
| Water | - 16620 | - 95.4 |
| Total Amounts | - 17424 | - 100 |

The protein mass is dried to yield a dry protein mass having the following composition:

| Protein Mass | - t/y | - % |
|---|---|---|
| Proteins | - 30700 | - 93.0 |
| Fats | - 350 | - 1.1 |
| Salts | - 470 | - 1.3 |
| Citric Acid | - 100 | - 0.3 |
| Water | - 1420 | - 4.3 |
| Total Amounts | - 33000 | - 100 |

The fat component obtained as described in Example 1 is washed in a centrifugal machine with 2170 t/y of water to yield the washed fat mass having the following composition:

| Washed Fat Phase | - t/y | - % |
|---|---|---|
| Protein | - 30 | - 0.1 |
| Fats | - 20890 | - 99.1 |
| Salts | - 4 | - 0,1 |
| Citric Acid | - 1 | - 0,1 |
| Water | - 176 | - 0.8 |
| Total Amounts | - 21101 | - 100 |

The salt component as described in Example 1 is combined with the salts as above described and dried to yield marketable salts having the following composition:

| Marketable salt phase | - t/y | - % |
|---|---|---|
| Phosphate salts | - 19500 | - 89.9 |
| Organic residues | - 600 | - 2.8 |
| Water | - 1590 | - 7.3 |
| Total Amounts | - 21690 | - 100 |

### EXAMPLE 4 - Preparation of the combustible mixture

The "dry protein mass" and "washed fat mass" described in Example 3 are mixed to yield a combustible mixture having the following composition:

| Combustible Mixture | - t/y | - % |
|---|---|---|
| Proteins | - 30730 | - 56.8 |
| fats | - 21240 | - 39.3 |
| Salts | - 434 | - 0.8 |
| Citric Acid | - 101 | - 0.2 |
| water | - 1596 | - 2.9 |
| Total Amounts | - 54101 | - 100 |

The above described mixture is sent to combustion.

### EXAMPLE 5 - Further treatment of the individual components of the mixture consisting of the slaughtering waste and protein meals.

By operating as described in Example 3 but using the components obtained as described in Example 2 as the starting product, "marketable" salts having the composition as set out below are obtained.

| Marketable Salt Phase | - t/y | - % |
|---|---|---|
| Phosphate Salts | - 25530 | - 90.2 |
| Organic Residues | - 720 | - 2.5 |
| Water | - 2080 | - 7.3 |
| Total Amounts | - 28330 | - 100 |

### EXAMPLE 6 - Further treatment of the individual components of the mixture consisting of the slaughtering waste and protein meals

By operating as described in Examples 3 and 4 but using the components obtained as described in Example 2, a "combustible mixture" having the below composition is obtained:

| Combustible Mixture | - t/y | - % |
|---|---|---|
| Proteins | - 40303 | - 65.8 |
| Fats | - 18040 | - 29.5 |
| Salts | - 574 | - 0.9 |
| Citric Acid | - 111 | - 0.2 |
| Water | - 2181 | - 3.6 |
| Total Amounts | - 61209 | - 100 |

## Claims

1. A process for treatment of an organic protein mass of animal origin comprising waste from animal slaughtering or a mixture containing waste from animal slaughtering and animal protein meals or animal protein meals, wherein said process comprises the following steps:
- grinding said waste from animal slaughtering or said mixture containing waste from animal slaughtering and animal protein meals to obtain a uniform mass;
- mixing said uniform mass in an aqueous medium to obtain a suspended organic protein mass;
- hydrolysing said suspended organic protein mass of animal origin to obtain at least one first separation of the components constituting said organic protein mass;
- separating the components obtained in the preceding step;
**characterised in that** said suspended organic protein mass of animal origin is hydrolysed in an aqueous solution comprising an acid substance having a pH value comprised from 4 to 6,5 and **in that** said separation of the components coming from the hydrolysis phase is carried out in a decanter or in a separator from which at least one protein component, at least one fat component, at least one salt component and an aqueous component are obtained.

2. A process as claimed in claim 1, **characterised in that** subsequently to said at least one first separation of the components constituting said organic protein mass, the process further comprises a grinding step before separation of said at least one protein component, at least one fat component, at least one salt component and an aqueous component.

3. A process as claimed in claims 1 or 2, **characterised in that** said at least one protein component, at least one fat component, at least one salt component are then worked so as to eliminate impurities incorporated therein.

4. A process as claimed in claim 3, **characterised in that** said protein component comprising a protein mass, residues of fat mass and residues of mineral salts is subsequently treated by the following steps:
- hydrolysing said protein component in an aqueous solution comprising an acid substance to obtain a second separation of the protein mass from the fat-mass residues and mineral salt residues;
- eliminating the fat-mass residues and mineral salt residues from the protein mass to obtain a protein mass containing an amount of mineral salts lower than 2% by weight with respect to the weight of the obtained protein mass.

5. A process as claimed in claim 4, **characterised in that** subsequently to hydrolysis of the protein component a washing step of said protein component is carried out in water in order to reduce the content of the mineral salt residues.

6. A process as claimed in claim 3, **characterised in that** said fat component comprising a fat mass, protein-mass residues and mineral salt residues is subsequently treated by the following steps:
- hydrolysing said fat component in an aqueous solution comprising an acid substance to obtain a second separation of the fat mass from the protein-mass residues and the mineral salt residues;
- eliminating the protein-mass residues and mineral salt residues from the fat mass so as to obtain a fat mass containing an amount of mineral salts lower than 0.1% by weight with respect to the weight of the obtained fat mass.

7. A process as claimed in claim 3, **characterised in that** said salt component is treated with an aqueous solution to eliminate the incorporated impurities and subsequently the obtained mineral salts are dried.

8. A process as claimed in at least one of the preceding claims, **characterised in that** a combustible mixture comprising said protein component and fat component in a ratio by weight included between 1:10 and 10:1 is burnt in a burner.

9. A process as claimed in at least one of the preceding claims, **characterised in that** a combustible mixture comprising said protein mass and fat mass in a ratio by weight included between 1:10 and 10:1 is burnt in a burner.

10. Use of the process as claimed in claims 1 to 9 for production of electrical energy.

11. Equipment for treatment of an organic protein mass of animal origin comprising waste from animal slaughtering or a mixture containing waste from animal slaughtering and animal protein meals or animal protein meals wherein said equipment comprises:
- grinding means (31) for grinding said waste from animal slaughtering or said mixture containing waste from animal slaughtering and animal protein meals to obtain a uniform mass;
- mixing means (28,30) for mixing said uniform mass in an aqueous medium to given temperature and pressure values to obtain a suspended organic protein mass;
- a container means (32a) for containing said suspended organic protein mass of animal origin and a hydrolysing substance to carry out hydrolysis of said suspended mass to obtain at least one first separation of the components constituting said organic protein mass;
- separation means (35) to carry out separation of the components constituting said organic protein mass;
- a plurality of containers (36, 37, 38, 39) each of which holding a respective component constituting the organic protein mass,
**characterised in that** said suspended organic protein mass of animal origin is hydrolysed in an aqueous solution comprising an acid substance having a pH value comprised from 4 to 6,5 and **in that** said separation means (35) comprise a centrifugal separator of the decanter type that carry out the separation of the components coming from the hydrolysis with the hydrolysing substance in: at least one protein component, at least one fat component, at least one salt component and an aqueous component.

12. Equipment as claimed in claim 11, **characterised in that** said mixing means (30) comprises a container (30a) holding said organic protein mass and a rotating propeller (30b) in said container (30a) to mix said organic protein mass.

13. Equipment as claimed in claim 11 and/or 12, **characterised in that** said grinding means (32) comprises a container (32a) for the organic protein mass; an acid solution introduced into said container and at least one Archimedean-screw element (32b) rotating in the container.

14. Equipment as claimed in at least one of claims 11 to 13, **characterised in that** said separation means (35) comprises a rotating container (35a).

## Patentansprüche

1. Verfahren zur Behandlung und Entsorgung einer organischen Proteinmasse tierischen Ursprungs umfassend Tierschlachtungsabfälle oder ein Gemisch enthaltend Tierschlachtungsabfälle und Tierproteinmehle oder Tierproteinmehle, wobei dieses Verfahren die folgende Schritte umfasst:
- Vermahlung der Tierschlachtungsabfälle oder des Gemisches umfassend Tierschlachtungsabfälle und Tierproteinmehle zu einer uniformen Masse;
- Mischen der uniformen Masse in einem wässrigen Medium zu einer suspendierten organischen Proteinmasse;
- Hydrolysieren der suspendierten organischen Proteinmasse tierischen Ursprungs, um mindestens eine erste Abscheidung der die organische Proteinmasse bildenden Bestandteile zu erhalten;
- Abscheiden der aus dem vorhergehenden Schritt erhaltenen Bestandteile;
**dadurch gekennzeichnet, daß** die suspendierte organische Proteinmasse tierischen Ursprungs in einer wässrigen Lösung hydrolysiert wird, wobei diese Lösung ein saures Stoff mit einem pH-Wert von 4 bis 6,5 umfasst, und daß diese Abscheidung der Bestandteile aus dem Hydrolysenschritt in einem Dekanter oder in einem Abscheider durchgeführt wird, woraus mindestens ein Proteinbestandteil, mindestens ein Fettbestandteil, mindestens ein Salzbestandteil und ein wässriger Bestandteil erhalten werden.

2. Verfahren nach Anspruch 1, **dadurch gekennzeichnet, daß** nach der mindestens einer ersten Abscheidung der die organische Proteinmasse bildenden Bestandteile das Verfahren einen Mahlschritt weiter umfasst, bevor der mindestens ein Proteinbestandteil, der mindestens ein Fettbestandteil, der mindestens ein Salzbestandteil und ein wässriger Bestandteil abgeschieden werden.

3. Verfahren nach Anspruch 1 oder 2, **dadurch gekennzeichnet, daß** der mindestens ein Proteinbestandteil, der mindestens ein Fettbestandteil, der mindestens ein Salzbestandteil weiter verarbeitet werden, um darin enthaltende Unreinheiten zu entfernen.

4. Verfahren nach Anspruch 3, **dadurch gekennzeichnet, daß** der eine Proteinmasse, Reste von Fettmasse und Reste von Mineralsalzen enthaltende Proteinbestandteil durch die folgenden Schritte danach behandelt wird:
- Hydrolysieren des Proteinbestandteils in einer wässrigen Lösung enthaltend ein saueres Stoff, um eine zweite Abscheidung der Proteinmasse aus den Fettmassenresten und Mineralsalzresten zu erhalten;
- Entfernen der Fettmassenresten und Mineralsalzresten von der Proteinmasse, um eine Proteinmasse mit einem Gehalt an Mineralsalzen unter 2 Gew. % in bezug auf das Gewicht der erhaltenen Proteinmasse zu erhalten.

5. Verfahren nach Anspruch 4, **dadurch gekennzeichnet, daß** nach der Hydrolyse des Proteinbestandteils ein Spülschritt des Proteinbestandteils in Wasser durchgeführt wird, um das Gehalt an Mineralsalzresten zu reduzieren.

6. Verfahren nach Anspruch 3, **dadurch gekennzeichnet, daß** der eine Fettmasse, Reste von Proteinmasse und Reste von Mineralsalzen enthaltende Fettbestandteil durch die folgenden Schritte danach behandelt wird:
- Hydrolysieren des Fettbestandteils in einer wässrigen Lösung enthaltend ein saueres Stoff, um eine zweite Abscheidung der Fettmasse aus den Proteinmassenresten und Mineralsalzresten zu erhalten;
- Entfernen der Proteinmassenresten und Mineralsalzresten von der Fettmasse, um eine Fettmasse mit einem Gehalt an Mineralsalzen unter 0,1 Gew. % in bezug auf das Gewicht der erhaltenen Fettmasse zu erhalten.

7. Verfahren nach Anspruch 3, **dadurch gekennzeichnet, daß** der Salzbestandteil zum Entfernen der darin enthaltenen Unreinheiten mit einer wässrigen Lösung behandelt wird und dann die erhaltenen Mineralsalze getrocknet werden.

8. Verfahren nach mindestens einem der vorherigen Ansprüche, **dadurch gekennzeichnet, daß** ein den Proteinbestandteil und den Fettbestandteil in einem Gewichtverhältnis von 1:10 bis 10:1 enthaltendes Brenngemisch in einem Brenner gebrannt wird.

9. Verfahren nach mindestens einem der vorherigen Ansprüche, **dadurch gekennzeichnet, daß** ein die Proteinmasse und die Fettmasse in einem Gewichtverhältnis von 1:10 bis 10:1 enthaltendes Brenngemisch in einem Brenner gebrannt wird.

10. Verwendung des Verfahren nach den Ansprüchen 1 zu 9 zur Elektrizitäterzeugung.

11. Vorrichtung zur Behandlung einer organischen Proteinmasse tierischen Ursprungs umfassend Tierschlachtungsabfälle oder ein Gemisch enthaltend Tierschlachtungsabfälle und Tierproteinmehle oder Tierproteinmehle, wobei diese Vorrichtung umfasst:
- Mahlmittel (31) zur Vermahlung der Tierschlachtungsabfälle oder der Mischung umfassend Tierschlachtungsabfälle und Tierproteinmehle zu einer uniformen Masse;
- Mischmittel (28, 30) zum Mischen der uniformen Masse in einem wässrigen Medium bei vorgegebenen Temperaturund Druckwerten zu einer suspendierten organischen Proteinmasse;
- einen Behälter (32a) zur Aufnahme der suspendierten organischen Proteinmasse tierischen Ursprungs und eines Hydrolysierstoffes zum Hydrolysieren der suspendierten Masse, um mindestens eine erste Abscheidung der die organische Proteinmasse bildenden Bestandteile zu erhalten;
- Abscheidungsmittel (35) zum Abscheiden der die organische Proteinmasse bildenden Bestandteile;
- eine Vielzahl von Behältern (36, 37, 38, 39), wobei jeder Behälter einen entsprechenden die organische Proteinmasse bildenden Bestandteil aufnimmt.
**dadurch gekennzeichnet, daß** die suspendierte organische Proteinmasse tierischen Ursprungs in einer wässrigen Lösung hydrolysiert wird, wobei diese Lösung ein saures Stoff mit einem pH-Wert von 4 bis 6,5 umfasst, und daß diese Abscheidungsmittel (35) einen Dekanterähnlichen Zentrifugalabscheider umfassen, zum Abscheiden der aus der mit dem Hydrolysierstoff durchgeführten Hydrolyse erhaltenen Bestandteile in den folgenden: mindestens einem Proteinbestandteil, mindestens einem Fettbestandteil, mindestens einem Salzbestandteil und einem wässrigen Bestandteil.

12. Vorrichtung nach Anspruch 11, **dadurch gekennzeichnet, daß** die Mischmittel (30) einen die organische Proteinmasse aufnehmenden Behälter (30a) und einen im Behälter (30a) drehbaren Propeller (30b) zum Mischen der organischen Proteinmasse umfassen.

13. Vorrichtung nach Anspruch 11 und/oder 12, **dadurch gekennzeichnet, daß** die Mahlmittel (32) einen Behälter (32a) für die organische Proteinmasse, eine in den Behälter eingeführte saure Lösung und mindestens ein im Behälter drehbares Schneckenelement (32b) umfassen.

14. Vorrichtung nach mindestens einem der Ansprüche 11 zu 13, **dadurch gekennzeichnet, daß** die Abscheidungsmittel (35) einen drehbaren Behälter (35a) umfassen.

## Revendications

1. Procédé de traitement et d'élimination d'une masse organique protéique d'origine animale comprenant déchets dérivés de l'abattage d'animaux ou un mélange contenant déchets dérivés de l'abattage d'animaux et farines protéiques animales ou farines protéiques animales, ledit procédé comprenant les étapes suivantes:
- broyer lesdits déchets dérivés de l'abattage d'animaux ou ledit mélange contenant déchets dérivés de l'abattage d'animaux et farines protéiques animales afin d'obtenir une masse uniforme;
- mélanger ladite masse uniforme dans un moyen aqueux afin d'obtenir une masse protéique organique suspendue;
- hydrolyser ladite masse protéique organique suspendue d'origine animale afin d'obtenir au moins une première séparation des composants qui constituent ladite masse protéique organique;
- séparer les composants obtenus dans l'étape qui précède;
**caractérisé en ce que** ladite masse protéique organique suspendue d'origine animale est hydrolysée dans une solution aqueuse comprenant une substance acide ayant une valeur de pH de 4 à 6,5, et **en ce que** ladite séparation des composants dérivés de l'étape d'hydrolyse a lieu dans un décanteur ou dans un séparateur dans lequel on obtient au moins un composant protéique, au moins un composant gras, au moins un composant de sels et un composant aqueux.

2. Procédé selon la revendication 1, **caractérisé en ce que** après ladite au moins une première séparation des composants qui constituent ladite masse protéique organique, le procédé comprend aussi une étape de broyage avant la séparation dudit au moins un composant protéique, au moins un composant gras, au moins un composant de sels et un composant aqueux.

3. Procédé selon la revendication 1 ou 2, **caractérisé en ce que** ledit au moins un composant protéique, au moins un composant gras, au moins un composant de sels sont ensuite travaillés afin d'éliminer les impuretés contenues dedans.

4. Procédé selon la revendication 3, **caractérisé en ce que** ledit composant protéique comprenant une masse protéique, résidus de masse grasse et résidus de sels minéraux est ensuite traité dans les étapes suivantes:
- hydrolyser ledit composant protéique dans une solution aqueuse comprenant une substance acide afin d'obtenir une deuxième séparation de la masse protéique des résidus de masse grasse et des résidus de sels minéraux;
- éliminer les résidus de masse grasse et les résidus de sels minéraux de la masse protéique afin d'obtenir une masse protéique contenant une quantité de sels minéraux inférieure à 2% en poids par rapport au poids de la masse protéique obtenue.

5. Procédé selon la revendication 4, **caractérisé en ce que** après l'hydrolyse du composant protéique une étape de lavage dudit composant protéique a lieu en eau afin de réduire le contenu des résidus de sels minéraux.

6. Procédé selon la revendication 3, **caractérisé en ce que** ledit composant gras comprenant une masse grasse, résidus de masse protéique et résidus de sels minéraux est ensuite traité dans les étapes suivantes:
- hydrolyser ledit composant gras dans une solution aqueuse comprenant une substance acide afin d'obtenir une deuxième séparation de la masse grasse des résidus de masse protéique et des résidus de sels minéraux;
- éliminer les résidus de masse protéique et les résidus de sels minéraux de la masse grasse afin d'obtenir une masse grasse contenant une quantité de sels minéraux inférieure à 0,1% en poids par rapport au poids de la masse grasse obtenue.

7. Procédé selon la revendication 3, **caractérisé en ce que** ledit composant de sels est traité avec une solution aqueuse afin d'éliminer les impuretés contenues dedans, et ensuite les sels minéraux obtenus sont séchés.

8. Procédé selon au moins une des revendications précédentes, **caractérisé en ce que** un mélange combustible comprenant ledit composant protéique et ledit composant gras dans un rapport en poids de 1:10 à 10:1 est brûlé dans un brûleur.

9. Procédé selon au moins une des revendications précédentes, **caractérisé en ce que** un mélange combustible comprenant ladite masse protéique et ladite masse grasse dans un rapport en poids de 1:10 à 10:1 est brûlé dans un brûleur.

10. Usage du procédé selon les revendications 1 à 9 pour la production d'électricité.

11. Equipement de traitement d'une masse organique protéique d'origine animale comprenant déchets dérivés de l'abattage d'animaux ou un mélange contenant déchets dérivés de l'abattage d'animaux et farines protéiques animales ou farines protéiques animales, ledit équipement comprenant:
- moyens de broyage (31) pour broyer lesdits déchets dérivés de l'abattage d'animaux ou ledit mélange contenant déchets dérivés de l'abattage d'animaux et farines protéiques animales afin d'obtenir une masse uniforme;
- moyens de mélange (28, 30) pour mélanger ladite masse uniforme dans un moyen aqueux à des valeurs données de température et de pression, afin d'obtenir une masse protéique organique suspendue;
- un conteneur (32a) pour contenir ladite masse organique suspendue d'origine animale et une substance d'hydrolyse pour hydrolyser ladite masse afin d'obtenir au moins une première séparation des composants qui constituent ladite masse protéique organique;
- moyens de séparation (35) pour séparer les composants qui constituent ladite masse protéique organique;
- une pluralité de conteneurs (36, 37, 38, 39), chacun contenant un composant correspondant qui constitue la masse protéique organique,
**caractérisé en ce que** ladite masse protéique organique suspendue d'origine animale est hydrolysée dans une solution aqueuse comprenant une substance acide ayant une valeur de pH de 4 à 6,5, et **en ce que** lesdits moyens de séparation (35) comprennent un séparateur centrifuge du type décanteur qui sépare les composants dérivés de l'étape d'hydrolyse avec la substance d'hydrolyse en: au moins un composant protéique, au moins un composant gras, au moins un composant de sels et un composant aqueux.

12. Equipement selon la revendication 11, **caractérisé en ce que** lesdits moyens de séparation (30) comprennent un conteneur (30a) contenant ladite masse organique protéique et une hélice rotative (30b) dans ledit conteneur (30a) afin de mélanger ladite masse protéique organique.

13. Equipement selon la revendication 11 et/ou 12,
**caractérisé en ce que** lesdits moyens de broyage (32) comprennent un conteneur (32a) pour la masse protéique organique, une solution acide introduite dans ledit conteneur et au moins un élément en vis d'Archimède (32b) tournant dans le conteneur.

14. Equipement selon au moins une des revendications 11 à 13, **caractérisé en ce que** lesdits moyens de séparation comprennent un conteneur rotatif (35a).
